# EUROPEAN PATENT SPECIFICATION

(11) **EP 3 130 972 B1**
(45) Date of publication and mention of the grant of the patent: **02.05.2018**
(21) Application number: 16183092.2
(22) Date of filing: 05.08.2016
(51) Int. Cl.: G05B 19/404, B21H 3/04

(54) **IMPROVED ROLLING MACHINE FOR FORMING THREADED PORTIONS ON CYLINDRICAL BODIES AND FEEDBACKED FORMING PROCESS**
VERBESSERTE WALZMASCHINE ZUR FORMUNG VON GEWINDEABSCHNITTEN AUF ZYLINDRISCHEN KÖRPERN UND RÜCKGEKOPPELTES FORMVERFAHREN
LAMINOIR AMÉLIORÉ DESTINÉ A FORMER DES PARTIES FILETÉES SUR DES CORPS CYLINDRIQUES ET PROCÉDÉ DE FORMAGE À ASSERVISSEMENT

(30) Priority: 10.08.2015 IT UB20153046
(43) Date of publication of application: 15.02.2017
(73) Proprietor: Mico S.r.l., 20122 Milano (IT)
(72) Inventor: Farina, Pietro, I-37069 Villafranca (VR) (IT)
(74) Representative: Gallo, Luca

(56) References cited:
- WO-A1-2008/062880

## Description

### Field of application

The present invention regards an improved rolling machine for forming threaded portions on cylindrical bodies and a feedbacked forming process, according to the preamble of the respective independent claims.

The present rolling machine and the process are inserted in the industrial field of precision mechanical machining achieved by means of cold plastic deformation and capable of conferring high mechanical performances to the machined metal components, in particular tenacity and fatigue strength.

The machine and the process, object of the invention, are advantageously intended to be used for making threaded portions of any type (metric, whitworth, ISO, GAS, etc.) on metal cylindrical bodies such as shafts, bars, rods etc.

### State of the art

The rolling machines of known type, currently available on the market, such as the one described in WO2008/062880, usually comprise two or more forming rollers mounted on a support structure, each of which provided with a threaded portion. The threaded portions of the rollers cooperate with each other in succession in order to plastically deform the surface of a cylindrical body placed along a central work axis, in order to make the desired threaded portion thereon.

Hereinbelow, with the expression "cylindrical body" it will be indicated the mechanical member or piece, whether it is a shaft, a bar or another item, on which one wishes to obtain the desired threaded portion.

Each forming roller is mounted on a tool-holder shaft or mandrel and is driven to rotate by a corresponding motor; in addition, each forming roller is also driven to be moved by a corresponding actuator along a transverse axis substantially perpendicular to the work axis in order to impart, by means of compression, with its threaded portion, an impression of the metal body to be formed.

The cylindrical body to be formed is supported at the center of the work axis by a suitable support and it is cold deformed by the threaded portions of the forming rollers which compress against it by rotating thereon.

The single forming rollers are adapted to successively form the desired threaded portion on the metal body to be machined, and for such purpose the threaded portion of each roller must follow, in an extremely precise manner, the impression made on the metal body by the threaded portion of the preceding forming roller.

The machining operations are controlled by means of a logic control unit, preferably of numerical control type, directed by an external computer (CNC).

The logic control unit receives the instructions from the operator by means of a work program which for example uses a standardized ISO language code.

Since the radial compression forces and the axial shearing forces that affect both the cylindrical body and the threaded portion of the forming roller are very high, generally two or more forming rollers are used in a manner such to equally distribute the forces and avoid breakage risks.

The adjustments to be made on the position of the forming rollers in order to obtain the threaded portion on the cylindrical body are rather complex; additionally, the elastic and plastic response of the material constituting the same cylindrical body must also be considered.

In particular, the following are necessary: phasing the forming rollers with respect to each other so that the impression of one is correctly followed by the impression of the next; tilting the forming rollers with respect to the axis of the cylindrical body for a correct following of the thread without starts; positioning the rollers at the correct distance from the work axis in order to obtain threaded portions on the cylindrical body of the desired depth.

More in detail, with reference to the first phase adjustment, it is known that each forming roller - when it is driven to rotate by means of the motors - carries out an angular displacement corresponding to an axial displacement of the threaded portion on the external lateral surface of the forming roller itself, since the threads are wound as a spiral in the axial direction.

More clearly, as is known, the cylindrical body during the machining thereof axially advances and rotates in contact with the forming rollers. The impression impressed on the cylindrical body by a forming roller makes an angular and axial displacement during the passage to the subsequent forming roller, which must exactly follow the impression of the preceding roller. For such purpose, the axial distance traveled from the groove of the cylindrical body, verified following the angular displacement of the cylindrical body itself, must be equal to the axial distance between the disengagement point of the threaded portion of the first forming roller and the engagement point of the threaded portion of the subsequent forming roller.

It is thus necessary to precisely know the axial position of the threaded portion of each forming roller with respect to an angular reference position and hence the mutual axial positions of the threaded portions of the forming rollers.

In addition, the diameter of the cylindrical body to be formed is generally different from that of the forming roller. In order to prevent multiple starts of the thread impression on the cylindrical body to be formed and in order to confer an advancing thrust on the same body, it is provided to tilt the axis of the forming rollers with respect to the axis of the cylindrical body in the plane that contains the same axes.

The tilt serves both for driving the piece and for adjusting the meeting of the thread in a manner such that - advantageously for cylindrical bodies of size larger than the rollers - there is no start of another thread but the circumference of the threaded portion of the forming roller is susceptible of creating the impression on the circumference of the body to be formed, even if of different diameter. As is known, this is made possible by adjusting the tilt of the rollers in a manner such that one component of the impression is adapted to drive the body and the start of the thread generated by the rollers on the cylindrical body is perfectly followed after a rotation of 360 degrees.

For cylindrical bodies of size smaller than the forming roller, it is usually provided to tilt the forming roller, thus obtaining multiple starts on the body to be formed.

Up to now, the adjustment of the tilt is achieved by rotating the support bracket for the forming rollers, without however there being the possibility of an immediate check of the adjustment made or even a feedback capable of adjusting the tilt following a control verification of the impression on the cylindrical body. Also for this reason, the rolling machines present up to now on the market have the drawback of requiring long calibration times of the position of the rollers in order to obtain the threaded portion of the desired form.

The depth of the threaded portion can also be adjusted by varying the position of the forming rollers with respect to the work axis coaxial with the cylindrical body.

Nevertheless, in practice, the depth of the threaded portion that is encountered on the cylindrical body also depends on the elastic response of the material constituting the cylindrical body; this can mean that once the measurements have been made on the cylindrical body, the depth differs from expectations.

The same form of the threaded portion can be affected by the characteristics of the material which determine, in a different manner from material to material, the mass displacements during the cold plastic deformation.

Therefore, the problem of setting the adjustments of the parameters relative to the position of the forming rollers, in order to obtain the cylindrical bodies having the desired threaded portions, is extremely felt in the field of rolling machines and forming processes initiated by the same.

Currently, the adjustments are made by using sample specimens of less expensive material, different from that of the cylindrical body to be formed, i.e. by making suitable corrections of the adjustment of the rollers once a result is encountered that is different from that desired.

Such process for adjusting the position parameters of the forming rollers has in practice shown that it does not lack drawbacks.

One drawback lies in the considerable time necessary for defining the precise position of each forming roller. One must also consider that the forming rollers must be substituted both for changing machining type with others with different characteristics, and for conducting normal maintenance in case of the wear thereof.

Therefore, the adjustment problem occurs rather frequently.

The position of the forming rollers defined with such process is also little precise and depends on the experience and capacity of the operator, who must control the impressions on the samples. Therefore, the quality reached is hard to repeat and depends on the ability of the operator.

In fact, the control of the groove generated on the sample specimen or on the finished product is carried out in an approximate manner by the operator himself/herself.

A further drawback lies in the high costs due to the numerous samples that must be employed in the phasing process or for the cylindrical bodies with incorrect threaded portions that must be discarded.

### Presentation of the invention

In this situation, the problem underlying the present invention is therefore to overcome the drawbacks manifested by the abovementioned solutions of known type by providing an improved rolling machine for forming threaded portions on cylindrical bodies and a feedbacked forming process, which allow making the threaded portions on the cylindrical bodies in an extremely precise manner, perfectly meeting the design characteristics.

A further object of the present invention is to provide an improved rolling machine for forming threaded portions on cylindrical bodies and a feedbacked forming process, which allow the production of cylindrical bodies with threaded portions of high quality standard.

A further object of the present invention is to provide an improved rolling machine for forming threaded portions on cylindrical bodies and a feedbacked forming process, which are precise and safe.

A further object of the present invention is to provide an improved rolling machine for forming threaded portions on cylindrical bodies and a feedbacked forming process, which are simple and inexpensive to achieve.

These and still other objects are all attained by the machine and by the process according to the enclosed claims.

### Brief description of the drawings

The technical characteristics of the present invention, according to the aforesaid objects, can be seen in the contents of the below-reported claims and the advantages thereof will be more evident in the following detailed description, made with reference to the enclosed figures, which represent a merely exemplifying and non-limiting embodiment of the invention in which:

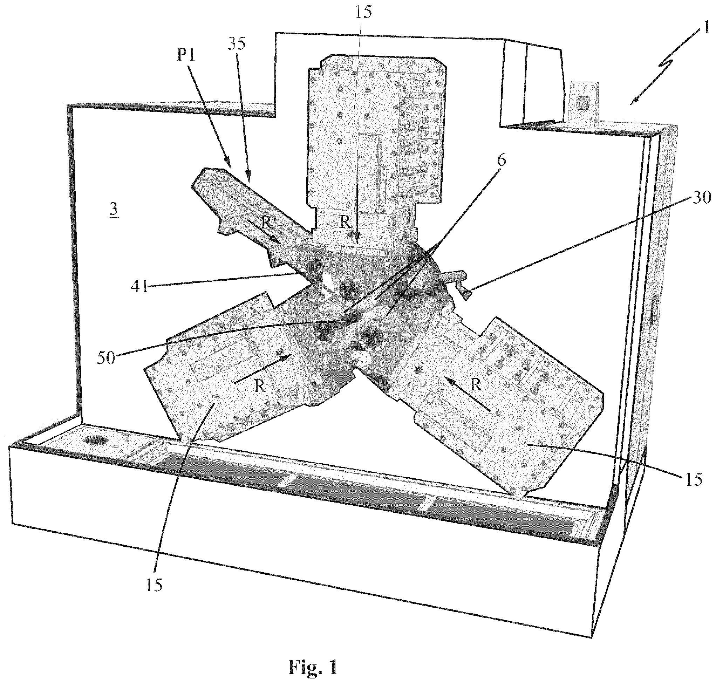

- figure 1 shows a front perspective view of the rolling machine object of the present invention with second sensor means in a non-operative position PI;

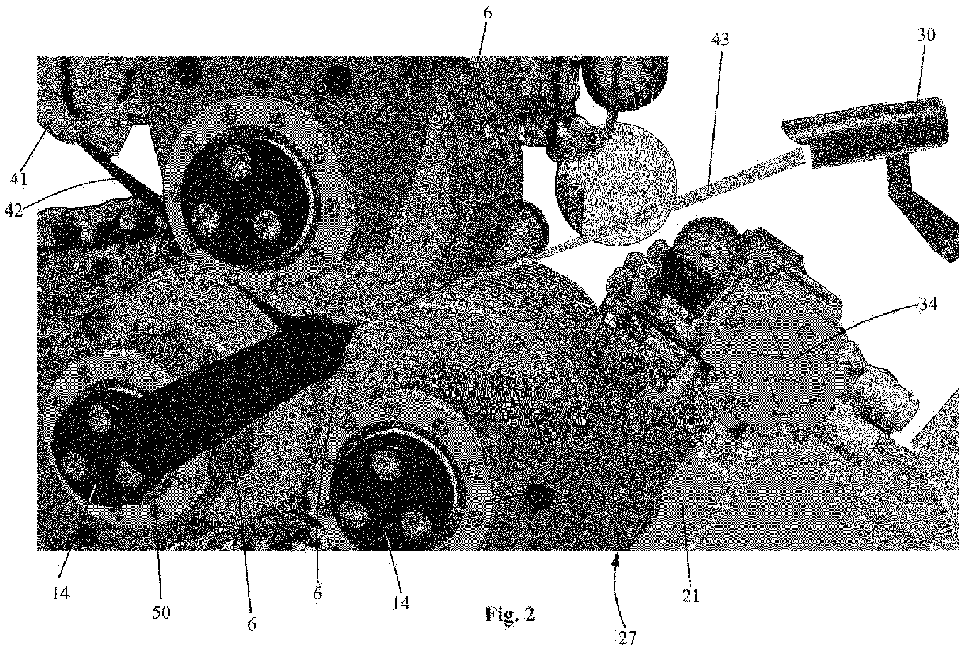

- figure 2 shows a substantially front view of a detail of the rolling machine of figure 1, with the following underlined: lighting pattern generator means and first sensor means for reading the reflected light thereof;

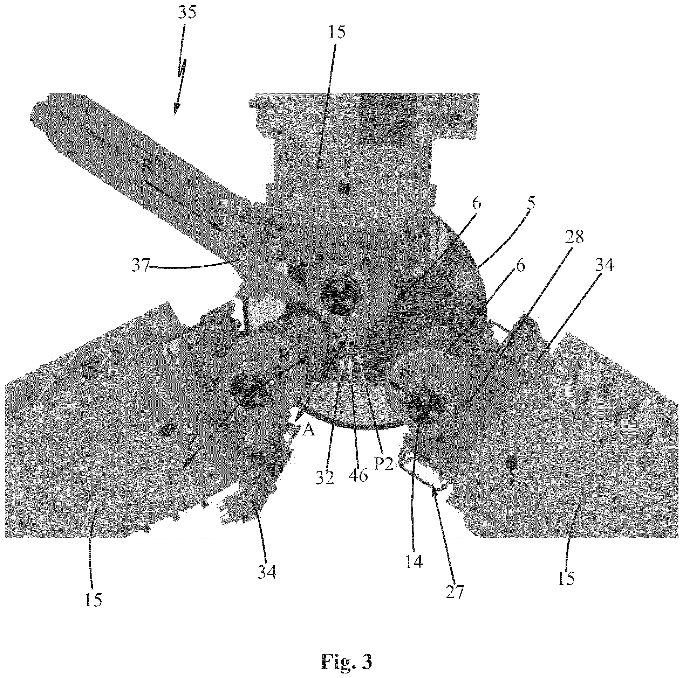

- figure 3 shows the detail of figure 1 with some parts removed in order to better illustrate other parts, in which the sensor means are in operative position and intercept a forming roller;

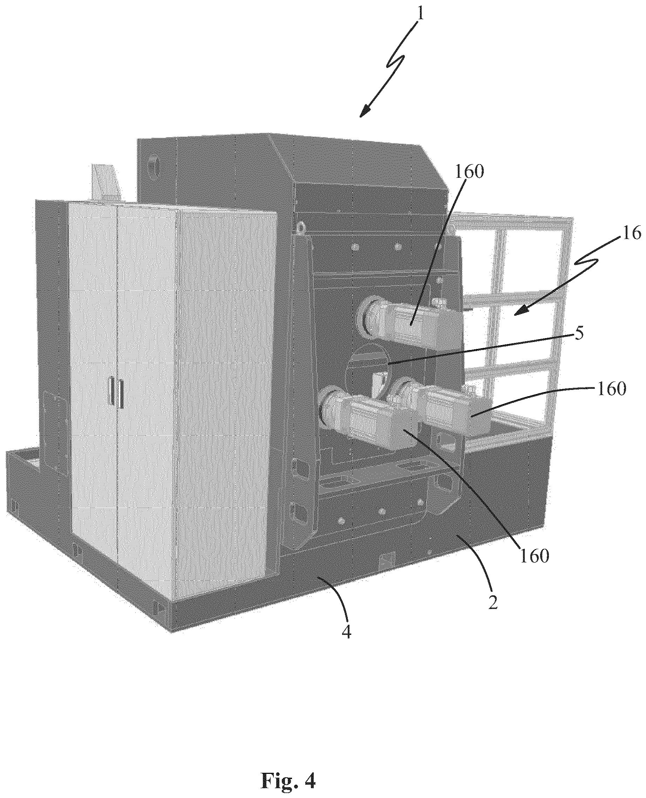

- figure 4 shows a rear perspective view of the rolling machine according to the invention, with motor means underlined;

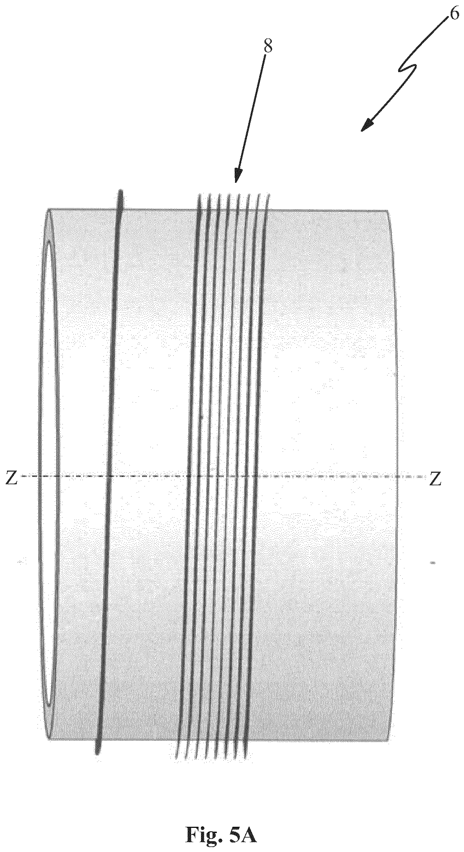

- figure 5A schematically shows a substantially side view of a detail of the rolling machine according to the invention relative to one of the forming rollers;

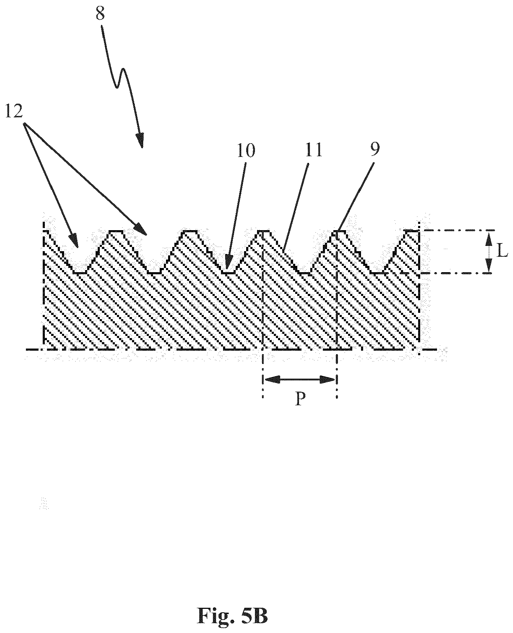

- figure 5B shows a detail of the forming roller of figure 5A in a longitudinal section view of its threaded portion;

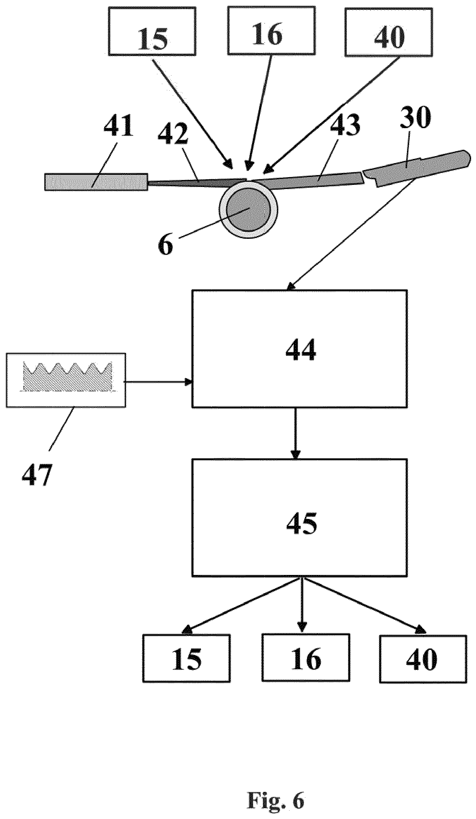

- figure 6 shows a logic scheme of the feedback aimed for forming the thread on the cylindrical body;

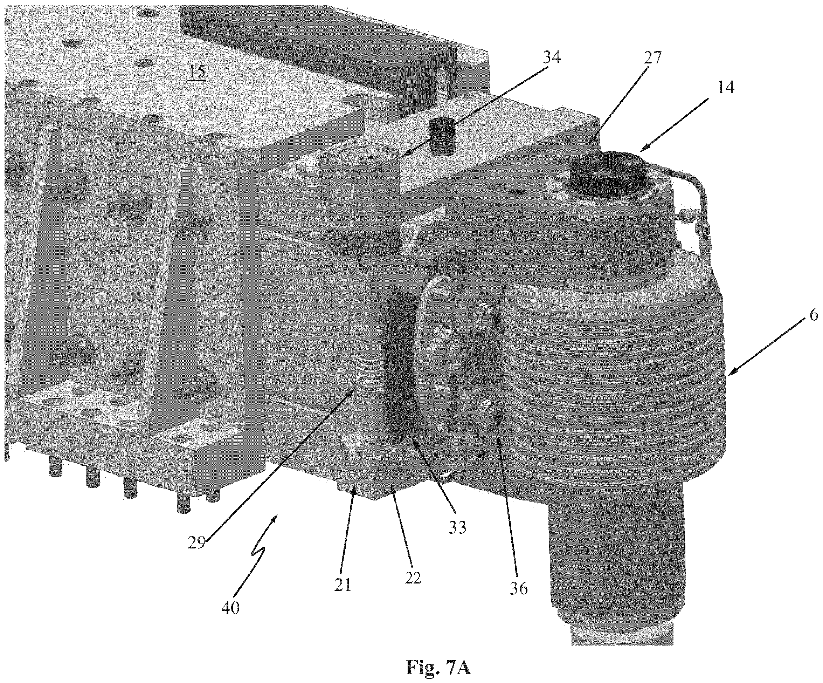

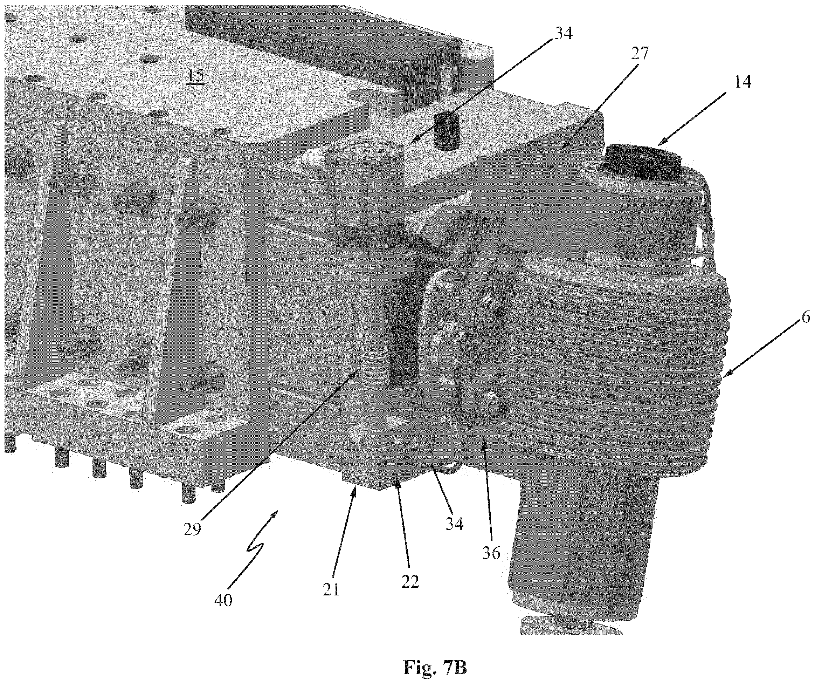

- figures 7A and 7B show a detail of the rolling machine, object of the present invention, relative to rotation means of the forming roller.

### Detail description of several preferred embodiments

With reference to the enclosed drawings, reference number 1 overall indicates a rolling machine for forming threaded portions on cylindrical bodies in accordance with the present invention.

This is generally intended to be employed for making the aforesaid threaded portions on cylindrical bodies of mechanical members such as shafts, bars, rods etc. for many different applications.

The threaded portions are obtained, in a *per se* known and conventional manner, by means of cold plastic deformation of the surface of the cylindrical body 50 to be formed, by compressing it between multiple forming rollers placed peripherally with respect to the cylindrical body 50 itself.

More in detail, the rolling machine 1 is provided with a support structure 2 intended to be abutted against the ground, which is mechanically associated with two or more forming rollers 6. The latter, as described in detail hereinbelow, operate with their threaded portion against the peripheral surface of the body to be formed, being driven to work by rotating substantially parallel to each other in a common rotation direction, and in compression against the surface of the cylindrical body 50 to be formed.

Preferably the support structure 2 is obtained by means of a metal framework, closed with panels that confer a box-like appearance thereto. In such support structure 2, a longitudinal extension can be identified that is parallel to a central work axis A, at which the cylindrical body 50 to be formed can be coaxially prearranged, such that such axis A is simultaneously the axis of the body 50 when the latter is in operative position.

In accordance with the embodiment of the enclosed figures, the support structure 2 is longitudinally extended between a front wall 3 and a rear wall 4, each provided with a central opening 5, e.g. with circular form.

The central work axis A is arranged orthogonal to the walls 3, 4, passes through the center of the aforesaid openings 5, which are then traversed by the cylindrical body 50 to be formed.

Each forming roller 6 is constituted by a cylindrical body, preferably made of steel, provided with a central symmetry axis that corresponds with its rotation axis Z, and is provided with a threaded portion 8 formed by at least one thread.

With the term thread, it is intended hereinbelow a single rib in relief with spiral form, arranged on the external surface of each forming roller 6. The threaded portion 8 of each forming roller 6 can be constituted by a single thread or by multiple threads that are side-by-side and parallel. With threaded portion 8, the set of threads will be intended (one thread or more than one threads) which are extended on the external lateral surface of the forming rollers 6. Only for the sake of description simplicity, hereinbelow the threaded portion 8 will be considered as composed of only one thread such that such terms thus coincide with the reference number "8"; nevertheless, the threaded portion can be composed of multiple threads without departing from the protective scope of the claims of the present patent.

Each thread 8 is extended without interruption with a spiral form that is extended, being wound, on the external surface of the forming roller 6, advancing along its longitudinal extension and rotation axis Z.

Each thread 8 can be substantially considered obtained, in a longitudinal reading direction parallel to its axis Z, from a succession of profiles 12 which of course are circumferentially joined together without interruption in the spiral extension of the thread.

The thread 8 has a section transverse to its spiral form extension that is for example approximately triangular or trapezoidal, with external crests 9 tapered with respect to an enlarged base. At the crests 9, the radius of the forming roller 6 is maximum, while at the bottoms 10 that are alternated with the crests 9, the radius of the forming rollers 6 is minimum.

The crests 9 and the bottoms 10 are connected by tilted flanks 11. The pitch P of the threaded portion 8 remains defined by the axial distance between two successive crests 9 while the radial distance between the crests 9 and the bottoms 10 defines the depth L of the threaded portion 9.

The thread 8 is therefore extended on the external peripheral surface of the roller 6 and around the rotation axis Z with a helical extension and with form and pitch characteristics that vary in accordance with the application needs of the cylindrical body 50 to be formed.

In accordance with the embodiment illustrated in the enclosed figures, the machine 1 provides for three forming rollers 6, placed 120 degrees from each other, which are adapted to cold plastically deform the cylindrical body 50 to be formed placed along the central work axis A of the machine and supported in such position by a suitable support structure (not illustrated) constituted for example by a plate with V-shaped concavity directed upward and fixed to the support structure of the machine 1.

The machine 1 also comprises two or more first actuator means 15 mounted on the support structure 2, each mechanically connected to a corresponding forming roller 6 in order to move it along a respective first transverse axis R substantially perpendicular to the work axis A.

Due to such first actuator means 15, the forming rollers 6 are capable of translating along the first transverse axes R close to and away from the central work axis A and consequently close to and away from the cylindrical body 50 to be formed.

The forming rollers 6 are positioned around the central work axis A with their extension axes Z preferably parallel to the central work axis A and at an adjustable radial distance due to the actuation of the first actuator means 15.

By varying the distance, it is possible to vary the depth of the threaded portion on the cylindrical body.

Motor means 16 are furthermore provided, arranged on the support structure 2 and mechanically connected to the forming rollers 6 in order to drive them in rotation abutted against the cylindrical body 50 to be formed, so as to impart a cold plastic deformation on the external surface.

For such purpose, the forming rollers 6 have a seat, e.g. a through hole made along their longitudinal extension axis Z, in which a tool-holder shaft 14 is inserted in a coupling relationship, connected by means of a transmission to the motor means 16.

The latter are obtained for example with electric motors 160, in particular of brushless type, each associated with a corresponding forming roller 6, and provided with drive shaft connected to the tool-holder shaft by means of a cardan joint transmission.

The cardan joints interposed between the drive shafts and the tool-holder shafts 14 allow the transmission of the rotation without having to align the drive shafts with the axes of the forming rollers 6, which can therefore rotate at difference distances from the central work axis A and they can have a tilt with respect to the rotation axes of the drive shafts.

Such tilt is necessary both for adjusting the driving of the cylindrical body 50 to be formed and for defining the thread starter point.

The motor means 16, and in particular the brushless motors, are capable of precisely controlling the rotation speed it its shafts and their angular position (and hence the position of the forming roller which they drive in rotation) with respect to an angular reference position.

By varying the angular position of the single forming rollers through the actuation of the motor means 16, it is possible to phase the threaded portion of one roller with respect to the others and to allow the impression generated by one to be correctly and precisely followed by the subsequent forming roller 6.

The combination of the action of transverse compression due to the first actuator means 15 which compress the forming rollers 6 on the cylindrical body 50 to be formed, and of the rotation motion of the forming rollers 6 around their rotation axis Z due to the motor means 16 allows plastically deforming the cylindrical body 50 placed along the central work axis A, obtaining progressive impressions on its peripheral external surface until the desired threaded portion is attained.

Advantageously, in accordance with the embodiment of the machine 1 illustrated in the enclosed figures, three forming rollers 6 are provided that arranged at 120° from each other with respect to the work axis A in a manner such to equally distribute the forces on the cylindrical body 50 to be formed.

In addition, in accordance with such embodiment illustrated in the enclosed figures, the first actuator means 15 are obtained with hydraulic actuators of linear type, oriented with the displacement axis aligned with the first transverse movement axis R of the corresponding forming roller 6 and passing through the work axis A.

Each actuator 15 is provided with a hollow cylindrical body 18 fixed to the front wall 3 of the support structure 2 of the machine 1 by means of a support case 19.

Within the hollow cylinder 18, a piston 20 is slidably inserted mounted along the first transverse axis R, such piston provided with a movable head 21, which mechanically supports a corresponding forming roller 6.

The actuator 15 is connected to a pressurized oil hydraulic plant capable of moving the piston 20 and the roller supported thereby along such first transverse axis R as well as for placing forming roller 6 under pressure with a force adjustable against the external surface of the cylindrical body 50 to be formed.

Advantageously, the movable heads 21 of the pistons 20 comprise brackets 27 provided with two perforated lateral wings 28 in which support bearings of the forming rollers 6 are housed.

The rotation axes Z of the tool-holder shafts 14 (or tool-holder mandrels) are susceptible of being adjusted, in a known manner, in their tilt with respect to the central work axis A, and only to a first approximation can they be considered substantially parallel to the work axis A itself of the cylindrical body 50 to be formed.

For such purpose, second actuator means 40 are also provided, the number thereof equal to the number of forming rollers 6, each capable of varying the tilt of the rotation axis Z of the corresponding forming roller 6 with respect to the work axis A of the machine 1 i.e. of the cylindrical body 50 to be formed.

For such purpose, second actuator means 40 are also provided, the number thereof equal to the number of forming rollers 6, each of which operating on a respective forming roller in order to rotate it around the transverse axis R of the actuator means 15 on which it is mounted. The forming roller, by rotating around such transverse axis R, varies the tilt of its rotation axis Z with respect to the work axis A and hence with respect to the axis of the cylindrical body 50 to be machined.

More in detail, the second actuator means 40 of each forming roller 6 are mounted on a base 22 of the corresponding movable head 21 of the piston 20 of the relative first actuator means 15 and operate on the support bracket 27 of the forming roller 6, so as to rotate it around the aforesaid transverse axis R.

For such purpose, the second actuator means 40 comprise a rack 33 mechanically fixed to the support bracket 27, and a work screw 29 mechanically engaged with the rack 33 and rotated by an electric motor 34.

By varying the tilt of the axis of the forming roller with respect to the work axis A, i.e. the axis of the cylindrical body 50, it is possible to modify the extension of the threaded portion (in particular of the pitch) on the cylindrical body.

Advantageously, one or more hydraulic pistons 36 are present (four of these, in accordance with the embodiment illustrated in the enclosed figures), which are driven downward in order to keep the support bracket 27 fixed to the base 22 and thus the forming roller 6 in the position attained or with the rotation angle set for the forming roller 6.

In operation, before rotating the forming roller by driving the second actuator means 40, it is necessary to drive the hydraulic pistons 36 upward in order to free the support bracket 27 from the base 22.

According to the idea underlying the present invention, the machine also comprises generator means 41 mounted on the support structure 2, e.g. on the front wall 3, and projecting a lighting pattern 42 substantially towards the work axis A in a manner such that it interferes with the external surface of the cylindrical body 50 to be formed, in order to generate a reflected light beam 43 indicative of the profile of the thread 8 of the same cylindrical body 50.

Advantageously, the generator means 41 comprise a laser generator of a point-like or beam-like lighting pattern i.e. of structured light, both light forms being distinguished by a high collimation of the projected light and advantageously being provided with a very narrow monochromaticity in order to use interferometer filters.

According to the invention, first sensor means 30 are also provided, also mechanically mounted on the support structure 2 and susceptible of reading the reflected light beam 43 of the cylindrical body 50 to be formed. More in detail, the first sensor means 30 are sensors of optical type, such as cameras, capable of recording images, in pixels, containing the profile of the thread of the cylindrical body 6.

Advantageously, the profile appears as a white line on a dark background, easily readable.

Calculation means 44 are also provided that are connected with a signal cable (or with another data communication connection means) to the first sensor means 30 in order to process the images detected thereby.

The calculation means 44 advantageously comprise a processor and are adapted to convert, by means of mathematical algorithms, the reflected light beam 43 indicative of the profile of the thread 8 into metric measurements.

In addition, the calculation means compare the detected metric measurements, such as the depth L of the thread, the pitch P of the thread, the tilt of the extension of the thread with respect to the axis A, or also the overall length of the thread over 360 degrees of the cylindrical body, with sample measurement values relative to a sample profile stored in a settable manner in a memory 47 of the calculation means 44.

From such comparison, the calculation means detect possible deviation values in one or more of the measurements of the detected profile relative, for example, to at least one of the aforesaid values of depth, pitch, length or another measurement of the profile of the thread 8.

Then, a logic control unit 45 is also present, such as a PLC connected to the calculation means 44 and susceptible of driving one or more from among the first actuator means 15, the second actuator means 40 and the motor means 16 if the calculation means 44 have detected deviations in the measurements of the profile of the thread greater than corresponding predefined threshold values.

The calculation means 44 can be integrated in the same logic control unit 45, or alternatively placed inside the sensor means 30.

The calculation means 44 define the spatial position, in particular absolute, of the single points of the profile of the thread, from which the desired metric measurements can be drawn such as the depth, the pitch or the length of the thread or other measurements indicative of the form of the thread that one wishes to obtain.

The coordinates (advantageously absolute) are defined through a triangulation starting from the information obtainable from the images and from the knowledge of the lighting pattern. The lighting pattern can be of any form and the technique of triangulation exploits the knowledge of the geometry of the pattern in order to carry out the measurements.

A particularly advantageous selection of the lighting pattern consists of the use of a laser beam generator. The intersection between the plane of the light beam and the external surface of the cylindrical body with the thread being formed borne thereon determines the profile formation. The light is reflected, then reaching a focusing optics on the sensor of a camera. The advantage deriving from the use of a laser beam projector includes an optimal collimation of the projected light, very narrow monochromaticity and a reduced power requirement, from which reduced consumptions are attained.

The calculation means 44 defining the spatial position of all the points of the profile are then susceptible of associating metric coordinates thereto in order to carry out measurements such as the depth or the pitch of the thread.

Advantageously, second sensor means 46 are provided that are mechanically associated with the support structure 2 and movable between at least one non-operative position P1, in which they are in distal position with respect to the forming rollers 6, and at least one operative position P2, in which they are in proximity to at least one forming roller 6, in order to detect the axial position (i.e. the axial coordinate) of the at least one thread 8 thereof.

The axial position is detected with respect to the axial reference position of the second sensor means 46. More in detail, therefore, such position can be determined in relative terms with respect to the sensor means or in absolute terms, e.g. with respect to references on the machine.

The machine 1 also comprises movement means 35 mounted on the support structure 2 and mechanically connected to the second sensor means 46, in order to move them between the aforesaid non-operative position P1 and the aforesaid operative position P2 along a second transverse axis R' perpendicular to the work axis A.

Preferably, the second sensor means 46 comprise a sensor device 31 mechanically connected to the movement means 35 and susceptible of producing an electric signal.

The sensor device is mechanically connected to a discoidal element 32, e.g. made of metal with the edge circumferentially tapered, susceptible of being moved with respect to an equilibrium position thereof once it comes into contact with the thread of the forming roller 6. Following such displacement, the disc 32 drives the sensor 31, which produces the signal indicative of the contact with the thread of the roller 6.

In operation, the metal disc 32 has a thickness sized such to penetrate for at least 30% of the depth L of the threaded portion 8 of the forming rollers 6 and advantageously up to 75% of the depth L.

Preferably, the sensor device of the second sensor means 46 has an operation of on/off type, i.e. it sends an electric signal to the logic control unit 45 when the metal disc 32 comes into contact with the thread 8 of the forming roller 6.

The abovementioned movement means 35 are mounted on the front wall 3 of the support structure 2 and are extended along a second transverse axis R' perpendicular to the central work axis A. Advantageously, such second transverse axis R' passes through the central work axis A, intercepting it at a known axial reference position.

The machine 1 operates second operative steps predetermined by means of the logic control unit 45 connected to the calculation means 44, to the second sensor means 46, to the first actuator means 15, to the motor means 16 and to the movement means 35 and allows adjusting the threaded portions 8 of the forming rollers 6 once the position of the threads of the single forming rollers 6 is defined.

The logic control unit 45 is in fact set to manage all the control steps for the position of the forming rollers 6 and for the working steps of the machine 1 as well as for the feedback process of the control of the threaded portion being formed.

For such purpose, the logic control unit receives instructions relative to the operative work modes from a program and receives signals from the calculation means 44 in order to control the threaded portion during forming.

In addition, initially the logic control unit 45 receives signals from the second sensor means 46 and consequently controls the movement means 35, the first actuator means 15 and the motor means 16.

Advantageously, the movement means 35 comprise a linear actuator provided with a movable arm 37 that is substantially extended along the second transverse axis R' and which supports the second sensor means 46 at one end.

The linear actuator advantageously is a pneumatic piston without stem in which the movable arm 37 is fixed to a trolley driven by the cylinder of the actuator, to be moved for a travel preferably defined between two end positions corresponding to the non-operative P1 and operative P2 positions of the abovementioned second sensor means 46.

An end stop position of the piston is therefore fixed in a manner such that the second sensor means 46 are situated exactly on the work axis A i.e. at their operative position P2. In this position, the axis of the contact sensor 31, which is mechanically connected to the movable arm 37 of the movement means 35, coincides with the work axis A of the machine and symmetry axis of the cylindrical body to be machined.

The second sensor means 46, in their operative position P2, are advantageously found in centered position with respect to the forming rollers 6 placed all around, e.g. three of these are placed at 120 degrees from each other.

In accordance with the embodiment illustrated in the enclosed figures, the axial position of the second sensor means 46 is taken as reference along the axial coordinate of the central work axis A and is advantageously employed as relative reference for the detection of the axial position of the threads 8 of the forming rollers 6.

Also forming an object of the present invention is a feedbacked forming process for a rolling machine 1, in particular of the above-described type; the same reference numbers will be maintained hereinbelow for the sake of description simplicity.

The process according to the present invention provides for a step for projecting a lighting pattern 42, in particular a light beam obtained with a structured light laser generator, towards a cylindrical body 50 to be formed that is coaxially arranged on the work axis A of the machine 1, in order to generate a reflected light beam 43 containing the information of the profile.

A step is then provided for detecting the reflected light beam 43 by means of first sensor means 30 in particular adapted to optically detect, in pixels, the profile of the thread 8.

There follows a calculation step in which the calculation means 44 process the data of the reflected light 43, defining metric measurements relative to the profile of the thread 8, which the calculation means 44 compare with sample measurements of a sample profile stored in a suitable memory connected to the calculation means 44 in order to detect deviations in one or more measurements relative to at least one of the values of depth, pitch and length of the profile of the thread 8.

Advantageously, the calculation means 44 define the absolute coordinates of the profile of the thread 8 by means of triangulation techniques.

Such techniques are able to calculate the spatial position of the points of the pixels of the profile starting from a known lighting pattern 42, from the position of the generation means 41, from the position of the first sensor means 30 and of the cylindrical body 50 to be formed.

In this manner, the calculation means 44 are capable of associating metric coordinates with the points of the profile detected in the reflected light 43.

At this point, the process provides for a control step in which the logic control unit 45 drives one or more of the means set to move the forming rollers 6 with respect to the cylindrical body 50, such as the first actuator means 15, the second actuator means 40 and the motor means 16 for deviations in the measurements of the profile detected by the calculation means 44 greater than corresponding predefined threshold values.

In particular, if the depth L of the thread 8 obtained on the cylindrical body 50 is less than the depth L of the stored sample profile, the logic control unit 45 comes to drive the first actuator means 15 which, being moved along the transverse axis R, move the forming rollers 6 close to the cylindrical body 50, in a manner such to exert an increased pressure on the cylindrical body 50 being machined, attaining a consequent greater depth L of the thread 8.

In particular, moreover, if the pitch P of the thread 8 attained on the cylindrical body 50 is different from the pitch P of the stored sample profile, having for example metric measurement values of the pitch P or of the width at the base of the thread greater than sample values of the stored sample profile, the logic control unit 45 will come to drive the second actuator means 40, in order to adjust the tilt of the support bracket 27 of the forming roller 6 so to obtain a tilt angle of the rotation axis Z of the forming roller 6 calculated for attaining the pitch P on the thread 8 of the cylindrical body 50 with metric value equal to that of the stored sample or in any case within a predefined threshold margin.

In addition, in accordance with a further embodiment of feedback regulation, if the thread 8 attained on the cylindrical body 50 by a forming roller 6 is not correctly followed by the subsequent forming roller 6, with a consequent irregularity of the metric value of the measured pitch P of the thread 8 with respect to the stored values of the sample profile, this would indicate an incorrect phasing between the forming rollers 6; consequently, the logic control unit 45 will come to drive the motor means 16, advantageously constituted by brushless motors, in order to correctly phase the forming rollers 6 with each other and bring the deviation between the value of the measured pitch and the value of stored pitch back below an acceptable threshold value.

Of course, in the practical achievement thereof, the machine can also assume shapes and configurations different that illustrated above without departing from the present scope of the claims.

## Claims

1. Improved rolling machine for forming a thread on cylindrical bodies, which comprises:
- a support structure (2);
- two or more forming rollers (6), mechanically associated with said support structure (2), each of which driven to rotate around its own rotation axis (Z) and provided with a threaded portion having at least one thread (8) extended around said rotation axis (Z), said forming rollers (6) being adapted to plastically deform a cylindrical body that can be arranged along a central work axis (A) of said machine (1);
- two or more first actuation means (15) mounted on said support structure (2), each mechanically connected to a corresponding said forming roller (6) in order to adjustably move it along a respective first transverse axis (R) perpendicular to said work axis (A);
- motor means (16) arranged on said support structure (2), mechanically connected to said forming rollers (6) and adapted to adjustably drive in rotation said forming rollers (6) on said cylindrical body in order to plastically deform it;
- two or more second actuation means (40) mounted on said first actuation means (15), each mechanically connected to a corresponding said forming roller (6) in order to adjustably vary the tilt angle of said rotation axis (Z) of said forming roller (6) with respect to said work axis (A) in the plane perpendicular to the first transverse axis (R) of said first actuator means (15);
- generator means (41) mounted on said support structure (2), projecting a lighting pattern (42) towards said work axis (A) to interfere with the external surface of said cylindrical body (50) to be formed, in order to generate a reflected light beam (43) indicative of the profile of the thread (8) of said cylindrical body (50) to be formed;
- first sensor means (30) mechanically mounted on said support structure (2) and adapted to read said reflected light beam (43) of the profile of the thread (8) of said cylindrical body (50) to be formed;
- calculation means (44) connected to said first sensor means (30) set for comparing measurement values (P, L), calculated from the images detected by said first sensor means (30), with stored reference measurements, in order to detect deviations of measurement in one or more of said measurement values from said reference measurements;
- a logic control unit (45) connected to said calculation means (44) adapted to drive at least one of said first actuation means (15), of said second actuation means (40) and of said motor means (16) for measurement deviations detected by said calculation means (44) greater than corresponding predefined threshold values.

2. Improved rolling machine according to claim 1, **characterized in that** said measurement values are relative to at least one of the values of depth (L), pitch (P) and length of the profile of said thread (8).

3. Improved rolling machine according to claim 1, **characterized in that** said generator means (41) comprise a laser generator of point-like or beam-like light and said first sensor means (30) comprise at least one optical sensor.

4. Improved rolling machine according to claim 1, **characterized in that** said calculation means (44) are adapted to associate metric coordinates to the points of said detected profile of said reflected light.

5. Feedbacked forming process for a rolling machine according to claim 1, which provides for the following operative steps:
- a step for projecting a lighting pattern (42) towards a cylindrical body (50) to be formed that is coaxially arranged on said work axis (A) of said machine (1), in order to generate a reflected light beam (43) containing the information of the profile;
- a step for detecting said reflected light beam (43) by means of first sensor means (30);
- a calculation step in which said calculation means (44) process the data of said reflected light (43), defining metric measurement values relative to at least one of the values of depth (L), pitch (P) and length of the profile of said thread (8), and compare such values with sample measurement values of a stored sample profile in order to detect deviation values between said metric measurement values and said sample measurement values;
- a control step in which said logic control unit (45) drives at least one of said first actuation means (15), of said second actuation means (40) and of said motor means (16) for deviations in said measurements of said profile detected by said calculation means (44) greater than corresponding predefined threshold values.

6. Feedbacked forming process according to claim 5, wherein said calculation means (44) define the absolute coordinates of the profile of said thread (8) by means of triangulation starting from a known lighting pattern (42), from the position of the generation means (41), from the position of the first sensor means (30) and of the cylindrical body (50) to be formed.

7. Feedbacked forming process according to claim 5, wherein said sensor means (30) optically detect, in pixels, the profile of said thread (8).

8. Feedbacked forming process according to claim 5, wherein said calculation means (44) associate metric coordinates to the points of said profile detected in said reflected light (43).

## Patentansprüche

1. Verbesserte Walzmaschine zur Formung von Gewindeabschnitten auf zylindrischen Körpern, die Folgendes umfasst:
- eine tragende Struktur (2);
- zwei oder mehrere mechanisch an der genannten tragenden Struktur (2) angebrachte Formwalzen (6), von denen jede um ihre Drehachse (Z) herum in Drehung versetzt wird und mit einem Gewindegang ausgestattet ist, der mindestens ein um die genannte Drehachse (Z) verlaufendes Gewinde (8) aufweist, wobei die genannten Formwalzen (6) geeignet sind, einen entlang einer zentralen Arbeitsachse (A) der genannten Maschine (1) verfügbaren zylindrischen Körper plastisch zu verformen;
- zwei oder mehrere erste auf der genannten tragenden Struktur (2) montierte Stellantriebselemente (15), von denen jedes mechanisch mit einer entsprechenden Formwalze (6) verbunden ist, um diese entlang einer entsprechenden ersten Querachse (R) senkrecht zu der genannten Arbeitsachse (A) auf einstellbare Weise zu verschieben;
- auf der genannten tragenden Struktur (2) angeordnete, mechanisch mit den genannten Formwalzen (6) verbundene Motorelemente (16), die geeignet sind, die genannten Formwalzen (6) auf dem genannten zylindrischen Körper auf einstellbare Weise in Drehung zu versetzen, um ihn plastisch zu verformen;
- zwei oder mehr auf den genannten ersten Stellantriebselementen (15) montierte zweite Stellantriebselemente (40), von denen jedes mit einer entsprechenden genannten Formwalze (6) verbunden ist, um den Neigungswinkel der genannten Drehachse (Z) der genannten Formwalze (6) im Verhältnis zu der genannten Arbeitsachse (A) in der zu der ersten Querachse (R) der genannten ersten Stellantriebselemente (15) senkrechten Ebene auf einstellbare Weise zu ändern;
- auf der genannten tragenden Struktur (2) montierte Generatorelemente (41), die ein Beleuchtungspattern (42) in Richtung der genannten Arbeitsachse (A) projizieren, um auf die Außenfläche des genannten zu formenden zylindrischen Körpers (50) zu wirken, um einen Strahl reflektierten Lichts (43) zu erzeugen, der das Gewindeprofil (8) des genannten zu formenden zylindrischen Körpers (50) angibt;
- mechanisch auf der genannten tragenden Struktur (2) montierte erste Sensorelemente (30), die geeignet sind, den genannten Strahl reflektierten Lichts (43) des Profils des Gewindes (8) des genannten zu formenden zylindrischen Körpers (50) zu lesen;
- an die genannten ersten Sensorelemente (30) angeschlossene Berechnungsvorrichtungen (44), die darauf ausgelegt sind, die anhand der von den genannten ersten Sensorelementen (30) erfassten Bildern berechneten Messwerte (P, L) mit gespeicherten Bezugsmessungen zu vergleichen, um Messabweichungen in einem oder mehreren der genannten Messwerte von den genannten Bezugsmessungen festzustellen;
- an die genannten Berechnungsvorrichtungen (44) angeschlossene logische Steuereinheit (45), die geeignet ist, mindestens eines der genannten ersten Stellantriebselemente (15), der genannten zweiten Stellantriebselemente (40) und der genannten Motorelemente (16) bei von den genannten Berechnungsvorrichtungen (44) erfassten Messabweichungen über den entsprechenden festgelegten Schwellenwerten zu steuern.

2. Verbesserte Walzmaschine nach Anspruch 1, **dadurch gekennzeichnet, dass** die genannten Messwerte sich auf mindestens einen der Werte von Tiefe (L), Steigung (P) und Länge des Profils des genannten Gewindes (8) beziehen.

3. Verbesserte Walzmaschine nach Anspruch 1, **dadurch gekennzeichnet, dass** die genannten Generatorelemente (41) einen Punkt- oder Strahl-Laserlichtgenerator und die genannten ersten Sensorelemente (30) mindestens einen optischen Sensor umfassen.

4. Verbesserte Walzmaschine nach Anspruch 1, **dadurch gekennzeichnet, dass** die genannten Berechnungsvorrichtungen (44) geeignet sind, den Punkten des von dem genannten reflektierten Licht erfassten Profils metrische Koordinaten zuzuordnen.

5. Rückgekoppeltes Formverfahren für eine Walzmaschine nach Anspruch 1, das die folgenden operativen Phasen vorsieht:
- eine Phase des Projizierens eines Beleuchtungspatterns (42) in Richtung eines koaxial zu der genannten Arbeitsachse (A) der genannten Maschine (1) angeordneten zu formenden zylindrischen Körpers (50), um einen die Profilinformation enthaltenden Strahl reflektierten Lichts (43) zu erzeugen;
- eine Phase des Erfassens des genannten Strahls reflektierten Lichts (43) mit Hilfe der ersten Sensorelemente (30);
- eine Berechnungsphase, in der die genannten Berechnungsvorrichtungen (44) die Daten des genannten reflektierten Lichts (43) verarbeiten und metrische Messwerte in Bezug auf mindestens einen der Werte von Tiefe (L), Steigung (P) und Länge des Profils des genannten Gewindes (8) definieren und diese mit den Mustermesswerten eines gespeicherten Musterprofils vergleichen, um die Werte von Abweichungen zwischen den genannten metrischen Messwerten und den genannten Mustermesswerten festzustellen;
- eine Phase der Kontrolle, in der die genannte logische Steuereinheit (45) mindestens eines der genannten ersten Stellantriebselemente (15), der genannten zweiten Stellantriebselemente (40) und der genannten Motorelemente (16) bei von den genannten Berechnungsvorrichtungen (44) erfassten Abweichungen bei den genannten Messungen des genannten Profils über den entsprechenden festgelegten Schwellenwerten zu steuern.

6. Rückgekoppeltes Formverfahren nach Anspruch 5, bei dem die genannten Berechnungsvorrichtungen (44) die absoluten Koordinaten des Profils des genannten Gewindes (8) mittels Triangulation ausgehend von einem bekannten Beleuchtungspattern (42), der Position der Generatorelemente (41), der Position der ersten Sensorelemente (30) und des zu formenden zylindrischen Körpers (50) definieren.

7. Rückgekoppeltes Formverfahren nach Anspruch 5, bei dem die genannten Sensorelemente (30) das Profil des genannten Gewindes (8) optisch in Pixel erfassen.

8. Rückgekoppeltes Formverfahren nach Anspruch 5, bei dem die genannten Berechnungsvorrichtungen (44) den Punkten des genannten in dem genannten reflektierten Licht erfassten Profils (43) metrische Koordinaten zuordnen.

## Revendications

1. Machine à rouler perfectionnée pour former un filetage sur des corps cylindriques, comprenant :
- une structure de support (2) ;
- deux ou plusieurs rouleaux mouleurs (6), associés mécaniquement à ladite structure de support (2), chacun desquels est actionné pour rouler autour de son axe de rotation (Z) et il est équipé d'un filetage ayant au moins un filet (8) se développant autour dudit axe de rotation (Z), lesdits rouleaux mouleurs (6) étant aptes à déformer plastiquement un corps cylindrique disponible le long d'un axe central (A) de ladite machine (1) ;
- deux ou plusieurs moyens actionneurs (15) assemblés sur ladite structure de support (2), chacun mécaniquement relié audit rouleau mouleur (6) correspondant pour le déplacer de façon réglable le long d'un premier axe transversal (R) respectif perpendiculaire audit axe de travail (A) ;
- des moyens moteurs (16) ménagés su ladite structure de support (2), reliés mécaniquement auxdits rouleaux mouleurs (6) et aptes à activer en rotation lesdits rouleaux mouleurs (6) de façon réglable et sur ledit corps cylindrique pour le déformer plastiquement ;
- deux ou plusieurs deuxièmes moyens actionneurs (40) assemblés sur lesdits premiers moyens actionneurs (15), chacun connecté mécaniquement audit rouleau mouleur (6) correspondant pour varier de façon réglable l'angle d'inclinaison dudit axe de rotation (Z) dudit rouleau mouleur (6) par rapport audit axe de travail (A) dans le plan perpendiculaire au premier axe transversal (R) desdits premiers moyens actionneurs (15) ;
- des moyens générateurs (41) assemblés sur ladite structure de support (2), projetant un pattern d'éclairage (42) vers ledit axe de travail (A) pour interférer avec la surface extérieure dudit corps cylindrique (50) à former pour générer un faisceau de lumière réfléchie (43) indicatif du profil du filet (8) dudit corps cylindrique (50) à former ;
- de premiers moyens capteurs (30) assemblés mécaniquement sur ladite structure de support (2) et aptes à lire ledit faisceau de lumière réfléchie (43) du profil du filet (8) dudit corps cylindrique (50) à former ;
- des moyens de calcul (44) reliés auxdits premiers moyens capteurs (30) configurés pour comparer les valeurs de mesure (P, L) calculées à partir des images détectées par ces premiers moyens capteurs (30) avec des mesures de référence mises en mémoire, pour détecter des écarts de mesure dans une ou dans plusieurs desdites valeurs de mesure à partir desdites mesures de référence ;
- une unité de contrôle logique (45) reliée auxdits moyens de calcul (44) apte à prescrire au moins un desdits premiers moyens actionneurs (15), desdits deuxièmes moyens actionneurs (40) et desdits moyens moteurs (16) pour des écarts de mesure détectés par lesdits moyens de calcul (44) supérieurs à des valeurs de seuil correspondantes prédéfinies.

2. Machine à rouler perfectionnée selon la revendication 1, **caractérisée en ce que** lesdites valeurs de mesure sont relatives à au moins une des valeurs de profondeur (L), pas (P) et longueur du profil dudit filet (8).

3. Machine à rouler perfectionnée selon la revendication 1, **caractérisée en ce que** lesdits moyens générateurs (41) comportent un générateur laser de lumière à points ou à lame et lesdits premiers moyens capteurs (30) comportent au moins un capteur optique.

4. Machine à rouler perfectionnée selon la revendication 1, **caractérisée en ce que** lesdits moyens de calcul (44) sont aptes à associer des coordonnées métriques aux points dudit profil détecté de ladite lumière réfléchie.

5. Procédé de formage rétroactivé pour une machine à rouler selon la revendication 1, lequel procédé envisage les étapes opérationnelles suivantes :
- une étape de projection d'un pattern d'éclairage (42) vers un corps cylindrique (50) à former agencé coaxialement sur ledit axe de travail (A) de ladite machine (1) pour générer un faisceau de lumière réfléchie (43) contenant l'information du profil ;
- une étape de détection dudit faisceau de lumière réfléchie (43) par l'intermédiaire de premiers moyens capteurs (30) ;
- une étape de calcul dans laquelle lesdits moyens de calcul (44) traitent les données de ladite lumière réfléchie (43) en définissant des valeurs de mesure métriques relatives à au moins une des valeurs de profondeur (L), pas (P) et de longueur du profil dudit filet (8) et ils les comparent avec des valeurs échantillon de mesure d'un profil échantillon mis en mémoire pour détecter des valeurs des écarts entre lesdites valeurs de mesure métriques et desdites valeurs de mesure échantillon ;
- une étape de contrôle dans laquelle ladite unité de contrôle logique (45) prescrit au moins un desdits premiers moyens actionneurs (15), desdits deuxièmes moyens actionneurs (40) et desdits moyens moteurs (16) pour des écarts dans lesdites mesures dudit profil détectés par lesdits moyens de calcul (44) supérieurs à des valeurs de seuil prédéfinies correspondantes.

6. Procédé de formage rétroactivé selon la revendication 5, dans lequel lesdits moyens de calcul (44) définissent les coordonnées absolues du profil dudit filet (8) par triangulation à partir d'un pattern d'éclairage connu (42), de la position des moyens de génération (41), de la position de premiers moyens capteurs (30) et du corps cylindrique (50) à former.

7. Procédé de formage rétroactivé selon la revendication 5, dans lequel lesdits moyens de capteurs (30) détectent optiquement en pixels le profil dudit filet (8).

8. Procédé de formage rétroactivé selon la revendication 5, dans lequel lesdits moyens de calcul (44) associent des coordonnées métriques aux points dudit profil détecté dans ladite lumière réfléchie (43).
